(19) Europäisches Patentamt

European Patent Office

Office européen des brevets

(11) Veröffentlichungsnummer: **0 317 740 B1**

(12) **EUROPÄISCHE PATENTSCHRIFT**

(45) Veröffentlichungstag der Patentschrift: **02.01.92**

(21) Anmeldenummer: **88116288.7**

(22) Anmeldetag: **01.10.88**

(51) Int. Cl.⁵: **B03C 5/02**

(54) **Elektrostatisches Reinigungsgerät für nichtleitende Flüssigkeiten.**

(30) Priorität: **25.11.87 DE 3739869**

(43) Veröffentlichungstag der Anmeldung:
**31.05.89 Patentblatt 89/22**

(45) Bekanntmachung des Hinweises auf die
Patenterteilung:
**02.01.92 Patentblatt 92/01**

(84) Benannte Vertragsstaaten:
**AT BE CH DE ES FR GB GR IT LI LU NL SE**

(56) Entgegenhaltungen:
**DE-A- 2 628 001**
**US-A- 3 117 920**
**US-A- 3 252 885**
**US-A- 3 655 550**

(73) Patentinhaber: **Friess, Michael, Dipl.-Ing.**
**Bruchhauser Weg 15 a**
**W-4010 Hilden(DE)**

(72) Erfinder: **Friess, Michael, Dipl.-Ing.**
**Bruchhauser Weg 15 a**
**W-4010 Hilden(DE)**

(74) Vertreter: **Fitzner, Ulrich, Dr.**
**Am Eichförstchen 2a**
**W-4030 Ratingen 4(DE)**

## Beschreibung

Die Erfindung betrifft ein elektrostatisches Reinigungsgerät für nichtleitende Flüssigkeiten, insbesondere zur Entfernung von festen Schmutzpartikeln.

Elektrostatische Reinigungsgeräte sind sehr gut zum Entfernen kleinster Schmutzpartikel, auch unter 1 um, aus nichtleitenden Flüssigkeiten, z.B. Öl, geeignet.

Bekannt ist ein elektrostatisches Reinigungsgerät der eingangs genannten Gattung, bei dem sich die Schmutzpartikel an Staubabscheideplatten aus Papier zwischen zwei Elektroden absetzen (DE-A-26 28 001).

Ferner ist eine Vorrichtung bekannt, bei der sich die Schmutzpartikel in taschenförmigen Vertiefungen der Elektroden sammeln (DE-C-26 44 787).

Bei einer weiteren Vorrichtung werden die Schmutzpartikel an stabförmigen Elektroden abgeschieden (DE-C-31 23 462).

Bei einer anderen Vorrichtung setzen sich die Schmutzpartikel an einem Bett aus Glaskugeln ab. Die Glaskugeln sind in einem Ringraum zwischen zwei Spulen, die das elektrische Feld erzeugen, angeordnet (DE-A-27 42 625).

Die Entfernung des Schmutzes aus den Geräten ist zum Teil problematisch. Bei den aus DE-C-26 44 787 und DE-C-31 23 462 bekannten Vorrichtungen muß der Schmutz zusammen mit einer größeren Menge der zu reinigenden Flüssigkeit entsorgt werden. Zusätzlich bieten diese Vorrichtungen nur eine geringe Oberfläche zur Schmutzabscheidung. Die in der DE-A-27 42 625 genannte Vorrichtung benötigt große Mengen Spülflüssigkeit zur Reinigung.

Der Erfindung liegt die Aufgabe zugrunde, ein elektrostatisches Reinigungsgerät zu schaffen, das bei hoher Standzeit der Abscheideelemente nichtleitende Flüssigkeiten besonders effektiv von Feststoffen reinigen kann.

Diese Aufgabe wird erfindungsgemäß durch Abscheideplatten erzielt, die in übereinanderliegenden schrägen Ebenen um ca 3°-10° geneigt zum elektrostatischen Feld und quer zur Strömungsrichtung angeordnet sind und Durchbrüche aufweisen.

Da sich die Schmutzpartikel bevorzugt an den Ecken zwischen en Abscheideplatten und den Elektrodenplatten anlagern, ist es besonders vorteilhaft, die Durchbrüche in den Abscheideplatten nahe den Elektroden anzuordnen, so daß die zu reinigende Flüssigkeit möglichst nahe an den Elektroden entlangströmt.

Durch die Anordnung der Abscheideplatten und der Durchbrüche ergibt sich eine besonders gute Reinigungswirkung und ein hoher Reinheitsgrad der behandelten Flüssigkeit. Durch die große Oberfläche der Abscheideplatten kann eine große Schmutzmenge abgeschieden werden. Dadurch ergibt sich eine lange Standzeit der Abscheideplatten und ein geringer Wartungsaufwand.

Im folgenden wird die Erfindung mit Hilfe dreier Zeichnungen näher beschrieben:

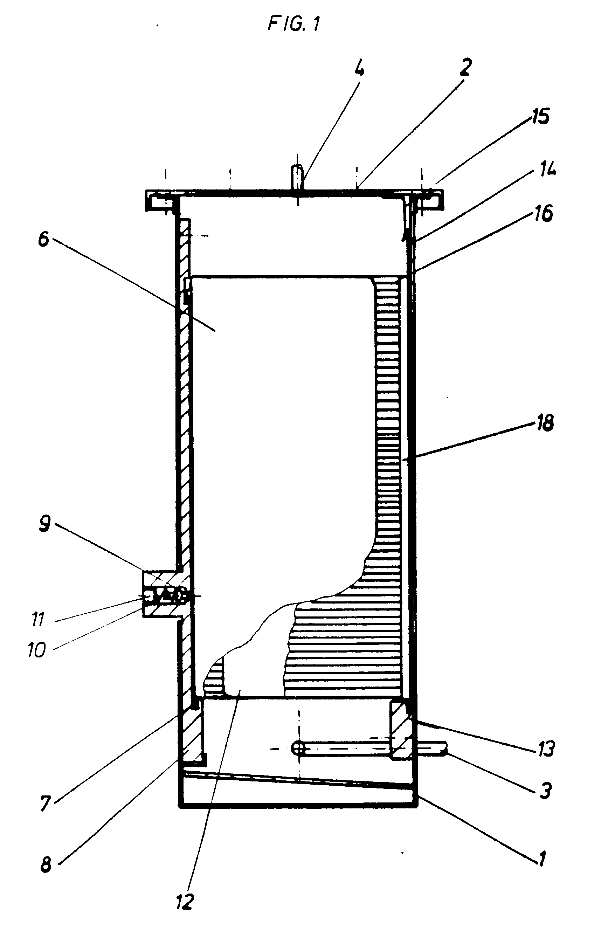

Figur 1     zeigt eine Seitenansicht des Reinigungstanks im Schnitt.

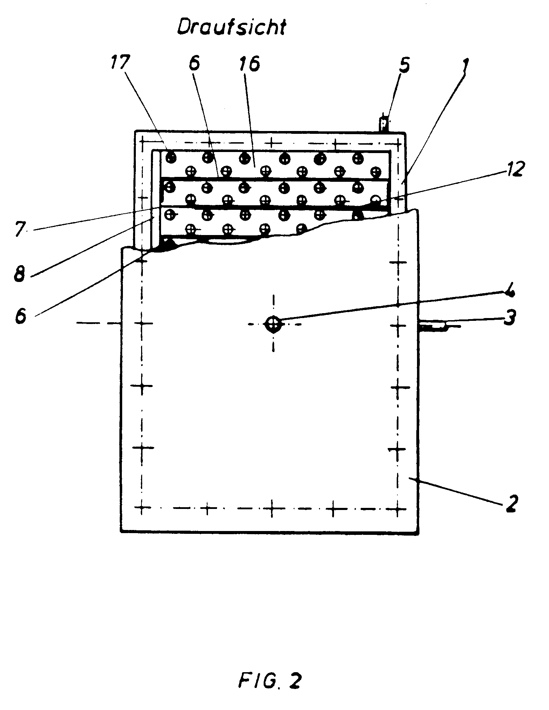

Figur 2     zeigt eine Draufsicht des Reinigungsbehälters.

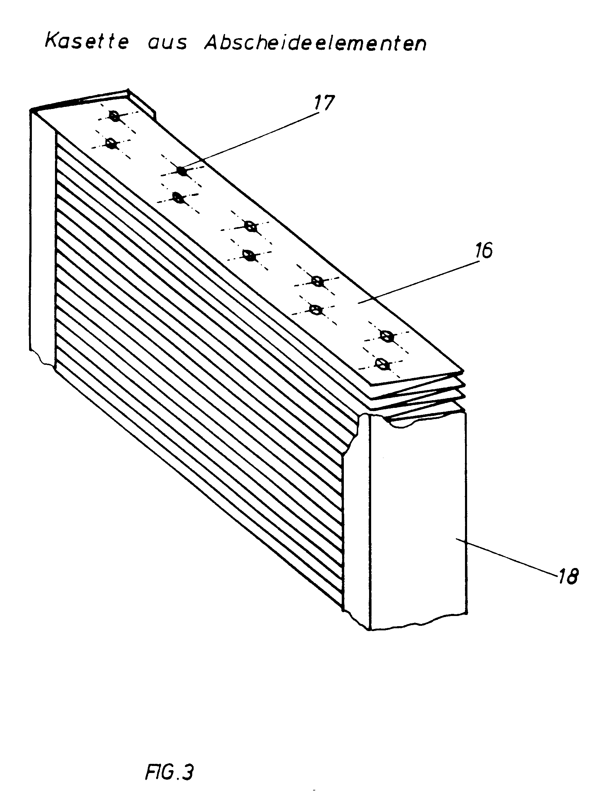

Figur 3     zeigt eine perspektivische Darstellung einer besonders bevorzugten Anordnung der Abscheideplatten.

Als Reinigungsbehälter ist ein rechteckiger Tank 1 vorgesehen. Die zu reinigende Flüssigkeit fließt durch den Einlaufstutzen 3 in den Behälter. Oberhalb des Einlaufstutzens 3 sind die Elektrodenplatten 6, 12 und die Abscheideplatten 16 angeordnet. Die Anodenplatten 6, 12 sind in gleichen Abständen auf eine gemeinsame Trägerplatte 14 aufgesetzt. Diese Trägerplatte 14 wird durch das Klemmstück 13, das mit der Behälterwand verschraubt wird, gehalten. Am oberen Ende wird die Trägerplatte 14 durch eine Klemmfeder 15, die am Deckel 2 befestigt ist, gehalten. Die Kathodenplatten 6 sind in gleichen Abständen auf eine gemeinsame Trägerplatte 7 aufgesetzt. Die Trägerplatte 7 wird in die Isolierplatte 8 eingehängt. Die Isolierplatte 8 wird unten von einem an der Tankwand befestigten Winkelprofil gehalten. Im oberen Teil ist die Isolierplatte 8 mit der Tankwand verschraubt. In der Isolierplatte 8 befindet sich ein metallener Kontaktstift 9 der durch einen Gewindestopfen 11 über eine Feder 10 an die Kathoden-Trägerplatte 7 gedrückt wird und so Kathoden 6 mit einer nichtdargestellten Hochspannungsquelle verbindet.

Zwischen den Elektrodenplatten 6, 12 und den äußeren Kathodenplatten 6 sowie der Tankwand bildet sich ein elektrostatisches Feld. Zwischen den Elektrodenplatten 6, 12 sind eine Vielzahl von Abscheideplatten 16 angeordnet.

Um einen im Wesentlichen gleichen Abstand zwischen den Abscheideplatten 16 und dem gewünschten Winkel der Abscheideplatten 16 zu dem elektrostatischen Feld zu gewährleisten, sind die Abscheideplatten 16 mit u-förmigen Profilen 18 zu Kassetten zusammengefaßt. Die Kassetten können aus einzelnen Abscheideplatten 16 und den Profilen 18 zusammengesetzt sein. Diese einzelnen Abscheideplatten 16 können auch in der Art eines Faltenbalges aus einem Stück bestehen und mit den Profilen 18 zu Kassetten zusammengesetzt werden. Die Durchbrüche 17 in den Abscheideplatten 16 sind möglichst nahe an den Elektrodenplatten 6, 12 angebracht, da am Rand der Abscheideplatten 16 die Abscheidewirkung am besten ist. Die Form der Durchbrüche 17 ist beliebig. Die Abscheideplatten 16 und die u-Profile 18 können aus den verschiedensten isolierenden Materialien, wie z.B.

Papier, Pappe, Glasfasermatten, Schaumstoffen usw. bestehen.

Die aus Abscheideplatten 16 und Halterung 18 bestehenden Kasetten, die zwischen den Elektrodenplatten 6, 12 angeordnet sind, liegen am unteren Ende auf der Isolierplatte 8 und dem Klemmstück 13 auf. Der Tank 1 wird durch den mit dem Tank 1 verschraubten Deckel 2 verschlossen. Im Deckel 2 ist der Ablauf 4 angeordnet. Das Bezugszeichen 5 bezeichnet einen Tankentleerungsstutzen. Die zu reinigende, isolierende Flüssigkeit wird durch eine nichtdargestellte Pumpe durch den Einlauf 3 in den Tank 1 gefördert. Größere Schmutzpartikel setzen sich am Boden ab, während kleine Partikel mit der zu reinigenden, isolierenden Flüssigkeit durch die Durchbrüche 17 in den Abscheideplatten 16 fließen. Unter Einwirkung des elektrostatischen Feldes lagern sich die Schmutzpartikel an den Abscheideplatten 16 an und die gereinigte, isolierende Flüssigkeit fließt zum Abfluß 4.

## Patentansprüche

1. Elektrostatisches Reinigungsgerät für nicht-leitende Flüssigkeiten, insbesondere zur Entfernung von festen Schmutzpartikeln, bestehend aus einem Reinigungsbehälter (1), einer Vielzahl von Elektroden (6,12), die abwechselnd Hochspannung oder Erdpotential führen, sowie sich zwischen den Elektroden befindlichen dielektrischen Abscheideplatten (16),
**dadurch gekennzeichnet,** daß

a) die Abscheideplatten (16) in übereinanderliegenden, schrägen Ebenen um ca. 3 - 10˚ geneigt zum elektrostatischen Feld angeordnet sind,

b) die Abscheideplatten (16) quer zur senkrechten Strömungsrichtung angeordnet sind, und

c) die Abscheideplatten (16) mit Durchbrüchen (17) für durchströmende nicht-leitende Flüssigkeit versehen sind.

2. Vorrichtung nach Anspruch 1,
**dadurch gekennzeichnet,** daß die Durchbrüche (17) in den Abscheideplatten (16) nahe an den Elektrodenplatten (6, 12) angeordnet sind.

## Claims

1. Apparatus for electrostatically cleaning non-conducting liquids, in particular for removing solid soil particles, consisting of a cleaning tank (1), a multidude of electrodes (6, 12), alternately carrying high voltage or ground potential, as well as dielectric separating plates (16) extending between said electrodes, characterized by that

(a) said separating plates (16) are arranged in the form of stacked plain surfaces inclined by 3 to 10˚ relative to the electrostatic field;

(b) the separating plates (16) are arranged perpendicular to the vertical direction of the flow; and

(c) the separating plates (16) are provided with punched holes (17) for said non-conducting liquid flowing therethrough.

2. Apparatus according to claim 1, characterized by that said punched holes (17) in the separating plates (16) are arranged close to the electrode plates (6, 12).

## Revendications

1. Appareil de nettoyage électrostatique pour fluides non-conducteurs spécialement pour éliminer des particules sales, composé d'un récipient d'épuration (1), plusieurs électrodes (6,12), qui conduisent alternativement une haute tension ou un potentiel de terre, et des plaques de séparation diélectriques (16) se trouvant entre les électrodes,

**caractérisé en ce que**

a) les plaques de séparation (16) sont mises en rang en plaines inclinées placées l'un sur l'autre tournées environ de 3 a 10˚ envers le champ électrostatique,

b) les plaques de séparation (16) sont mises en rang à travers de la direction verticale du courant,

c) les plaques de séparation (16) ont des percements (17) pour laisser couler à travers les fluides non-conducteurs.

2. Procédé selon la revendication 1

**caractérisé en ce que**

les percements (17) dans les plaques de séparation (16) sont mises en rang près des électrodes (6,12).

FIG. 1

Draufsicht

FIG. 2

Kasette aus Abscheideelementen

FIG.3